(19) Europäisches Patentamt
European Patent Office
Office européen des brevets

(11) **EP 4 228 146 A1**

(12) **EUROPÄISCHE PATENTANMELDUNG**

(43) Veröffentlichungstag:
16.08.2023 Patentblatt 2023/33

(21) Anmeldenummer: 23154114.5

(22) Anmeldetag: 31.01.2023

(51) Internationale Patentklassifikation (IPC):
*H02P 6/18* (2016.01)          *F25B 31/02* (2006.01)
*H02P 21/18* (2016.01)

(52) Gemeinsame Patentklassifikation (CPC):
**H02P 6/18; F25B 31/023; H02P 21/18**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **14.02.2022 DE 102022201517**

(71) Anmelder: **Robert Bosch GmbH
70442 Stuttgart (DE)**

(72) Erfinder:
• **Gaenzle, David
70771 Leinfelden-Echterdingen (DE)**
• **Manderla, Maximilian
61440 Oberursel (DE)**
• **Bayer, Fabia
70806 Kornwestheim (DE)**

(54) **VERFAHREN ZUM BETRIEB EINES ELEKTROMOTORS, EIN SOLCHES VERFAHREN UMSETZENDER ELEKTROMOTOR, EIN KOMPRESSOR MIT EINEM SOLCHEN ELEKTROMOTOR UND EINE KRAFTWÄRMEMASCHINE MIT EINEM SOLCHEN KOMPRESSOR**

(57)    Die Erfindung geht aus von einem Verfahren zum Betrieb eines Elektromotors, welcher zumindest einen Stator (14) und einen Rotor (16) umfasst, wobei in zumindest einem Verfahrensschritt ein mechanischer Drehpositionsparameter (18) des Rotors (16) relativ zu dem Stator (14) ermittelt wird und wobei in zumindest einem Verfahrensschritt einer mechanischen Störung (20) einer Drehbewegung des Rotors (16) in Abhängigkeit von dem ermittelten mechanischen Drehpositions-parameter (18) entgegengewirkt wird.

Es wird vorgeschlagen, dass der mechanische Drehpositionsparameter (18) in Abhängigkeit von einer Kenngröße (22, 24, 26) des Elektromotors ermittelt wird, welche einen Zusammenhang zwischen einer Phasenlage der mechanischen Störung (20) und zumindest einer elektrischen Drehposition (28) des Elektromotors beschreibt.

**Fig. 3**

EP 4 228 146 A1

**Beschreibung**

Stand der Technik

Es ist bereits ein Verfahren zum Betrieb eines Elektromotors, welcher zumindest einen Stator und einen Rotor umfasst, vorgeschlagen worden, bei welchem in zumindest einem Verfahrensschritt ein mechanischer Drehpositionsparameter des Rotors relativ zu dem Stator ermittelt wird und wobei in zumindest einem Verfahrensschritt einer mechanischen Störung einer Drehbewegung des Rotors in Abhängigkeit von dem ermittelten mechanischen Drehpositionsparameter entgegengewirkt wird.

Offenbarung der Erfindung

Die Erfindung geht aus von einem Verfahren zum Betrieb eines Elektromotors, welcher zumindest einen Stator und einen Rotor umfasst, wobei in zumindest einem Verfahrensschritt des Verfahrens ein mechanischer Drehpositionsparameter des Rotors relativ zu dem Stator ermittelt wird und wobei in zumindest einem Verfahrensschritt einer mechanischen Störung einer Drehbewegung des Rotors in Abhängigkeit von dem ermittelten mechanischen Drehpositionsparameter entgegengewirkt wird.

Es wird vorgeschlagen, dass der mechanische Drehpositionsparameter in Abhängigkeit von einer Kenngröße des Elektromotors ermittelt wird, welche einen Zusammenhang zwischen einer Phasenlage der mechanischen Störung und zumindest einer elektrischen Drehposition des Elektromotors beschreibt. Das Verfahren ist insbesondere dazu vorgesehen, einer periodisch auftretenden mechanischen Störung, beispielsweise bei einer periodisch schwankenden Last des Elektromotors, entgegenzuwirken. Die mechanische Störung äußert sich insbesondere in einer Drehzahlwelligkeit des Rotors, insbesondere auf einer Oberwelle einer Grundfrequenz der Drehbewegung des Rotors. Der Elektromotor umfasst vorzugsweise eine Steuer- oder Regeleinheit zu einem Erstellen eines elektrischen Kommutierungssignals, um den Rotor relativ zu dem Stator anzutreiben. Die Steuer- oder Regeleinheit ist bevorzugt zu einer feldorientierten Regelung oder einer Vorsteuerung des Elektromotors vorgesehen. Das Kommutierungssignal definiert insbesondere die elektrische Drehposition des Elektromotors. Ein Istwert der elektrischen Drehposition schätzt die Steuer- oder Regeleinheit vorzugsweise in Abhängigkeit von mit dem Kommutierungssignal eingestellten Statorströmen ab. Die Steuer- oder Regeleinheit addiert vorzugsweise ein Kompensationssignal auf das Kommutierungssignal auf, um der mechanischen Störung entgegenzuwirken. Vorzugsweise ist das Kompensationssignal dazu vorgesehen, eine Amplitude der mechanischen Störung zumindest um 5 %, bevorzugt um mehr als 25%, besonders bevorzugt um mehr als 50%, überaus bevorzugt um mehr als 75%, im Vergleich zu einem Betrieb ohne Kompensationssignal zu verringern. Insbesondere addiert die Steuer- oder Regeleinheit das Kompensationssignal und das Kommutierungssignal in Abhängigkeit von der Phasenlage der mechanischen Störung und von dem mechanischen Drehpositionsparameter. Besonders bevorzugt addiert die Steuer- oder Regeleinheit das Kompensationssignal phasenverschoben, insbesondere gegenphasig, zu der mechanischen Störung auf das Kommutierungssignal auf, um eine Amplitude der mechanischen Störung zu verringern. Um den mechanischen Drehpositionsparameter zu ermitteln wertet die Steuer- oder Regeleinheit vorzugsweise die Kenngröße des Elektromotors aus. Insbesondere nutzt die Steuer- oder Regeleinheit einen Softwaresensor, um die mechanische Störung, insbesondere die Phasenlage und optional die Amplitude der mechanischen Störung, und/oder den mechanischen Drehpositionsparameter zu ermitteln. Die Steuer- oder Regeleinheit wertet insbesondere ein Störsignal aus, um die Phasenlage der mechanischen Störung zu ermitteln. Das Störsignal kann ein Betriebssignal des Elektromotors oder eines den Elektromotor verwendenden Geräts sein, welches die mechanische Störung, insbesondere aufgrund parasitärer Kopplung, enthält oder welches die mechanische Störung verursacht. Beispielsweise ist das Störsignal ein mit dem Kommutierungssignal verknüpfter Statorstrom oder ein Lastverlauf einer Last des Elektromotors, beispielsweise ein Druckverlauf eines den Elektromotor verwendenden Kompressors.

Die Kenngröße verknüpft vorzugsweise die mechanische Störung, insbesondere die Phasenlage, mit der elektrischen Drehposition, besonders bevorzugt durch Differenzbildung. Vorzugsweise ist in der Kenngröße die elektrische Drehposition und/oder die mechanische Störung mit einem Faktor beaufschlagt, der von der Anzahl der Polpaare des Elektromotors abhängt. Vorzugsweise ist in der Kenngröße die elektrische Drehposition und/oder die mechanische Störung mit einem Faktor beaufschlagt, der von einem Frequenzverhältnis der mechanischen Störung relativ zu der Drehbewegung des Rotors abhängt. Die mechanische Störung umfasst insbesondere zumindest eine Harmonische der Grundfrequenz der Drehbewegung des Rotors. Die Steuer- oder Regeleinheit stellt die Grundfrequenz der Drehbewegung vorzugsweise mittels des Kommutationssignals ein. Insbesondere unterscheidet sich die Kenngröße zwischen zwei verschiedenen Durchläufen der elektrischen Drehposition innerhalb desselben Durchlaufs der Drehbewegung des Rotors. Insbesondere weist die Kenngröße einen Sprung bei einem Nulldurchlauf der elektrischen Drehposition auf. Die Kenngröße ist vorzugsweise während eines vollständigen Durchlaufs der elektrischen Drehposition zumindest im Wesentlichen konstant. Unter "im Wesentlichen konstant" soll insbesondere verstanden werden, dass Schwankungen und/oder eine Änderung der Kenngröße kleiner, insbesondere mehr als 10 % kleiner, vorzugsweise mehr als 25% kleiner, bevorzugt mehr als 50% kleiner, besonders bevorzugt mehr als 75% kleiner, als ein Sprung der Kenngröße bei einem Nulldurchlauf der elektrischen Drehposition sind/ist. Insbesondere ordnet die Steuer- oder Regeleinheit unterschiedlichen Niveaus der Kenngröße Werte des Drehpositionsparameters zu.

Durch die erfindungsgemäße Ausgestaltung kann der Drehpositionsparameter mit vorteilhaft wenig Speicherbedarf und mit vorteilhaft wenig Rechenaufwand während eines Betriebs des Elektromotors ermittelt und aktualisiert werden. Insbesondere kann eine Sensorik eines mit dem Verfahren betriebenen Elektromotors vorteilhaft einfach gehalten werden. Insbesondere kann auf eine Noise, Vibration, Harshness (NVH)-Sensorik verzichtet werden. Insbesondere kann der mechanischen Störung, insbesondere auch ohne NVH-Sensorik, während eines Betriebs des Elektromotors vorteilhaft schnell, insbesondere in Echtzeit, entgegengewirkt werden.

Weiter wird vorgeschlagen, dass bei einem Einschalten des Elektromotors ein Istwert der Kenngröße mit einem im Vorfeld des Betriebs ermittelten Referenzwert der Kenngröße verglichen wird, um den mechanischen Drehpositionsparameter zu bestimmen. Vorzugsweise betreibt die Steuer- oder Regeleinheit den Elektromotor in einem Testbetrieb ohne Kompensationssignal. Vorzugsweise erfasst die Steuer- oder Regeleinheit, insbesondere im Testbetrieb, ein Zeitintervall des Störsignals, welches vorzugsweise ein ganzzahlig Vielfaches einer Periode der mechanischen Störung und ein ganzzahlig Vielfaches einer Periode der elektrischen Drehposition ist. Vorzugsweise ermittelt die Steuer- oder Regeleinheit die Phasenlage der mechanischen Störung, insbesondere im Testbetrieb, mittels Fouriertransformation, insbesondere diskreter Fouriertransformation, aus dem erfassten Zeitintervall des Störsignals. Insbesondere ermittelt die Steuer- oder Regeleinheit im Testbetrieb die Kenngröße mit der aus dem Zeitintervall des Störsignals ermittelten Phasenlage. Insbesondere speichert die Steuer- oder Regeleinheit die ermittelte Kenngröße als Referenzwert in einem Speicher der Steuer- oder Regeleinheit ab. Vorzugsweise ordnet die Steuer- oder Regeleinheit dem Referenzwert die erste Periode der elektrischen Drehposition innerhalb einer Periode der mechanischen Drehbewegung zu. Insbesondere ordnet die Steuer- oder Regeleinheit dem zuletzt durchschrittenen Nulldurchgang der elektrischen Drehposition einen Nullpunkt der mechanischen Drehbewegung des Rotors zu. Durch die erfindungsgemäße Ausgestaltung kann vorteilhaft einfach ein reproduzierbarer Nullpunkt des Drehpositionsparameters definiert werden. Insbesondere kann auf eine Erfassung eines Istwerts des Drehpositionsparameters relativ zu einem absoluten Nullpunkt des Drehpositionsparameters verzichtet werden.

Weiter wird vorgeschlagen, dass die Phasenlage der mechanischen Störung mittels diskreter Fourieranalyse ermittelt wird. Insbesondere ermittelt die Steuer- oder Regeleinheit eine, insbesondere genau eine, insbesondere komplexe, Fourierkomponente des Störsignals mittels der diskreten Fourieranalyse, um die Phasenlage der mechanischen Störung zu ermitteln. Bei einem Entgegenwirken mehrerer mechanischer Störungen ermittelt die Steuer- oder Regeleinheit vorzugsweise pro mechanischer Störung eine, insbesondere genau eine, insbesondere komplexe, Fourierkomponente des Störsignals oder unterschiedlicher Störsignale mittels der diskreten Fourieranalyse. Insbesondere speichert die Steuer- oder Regeleinheit während der diskreten Fourieranalyse in jedem auszuwertendem Zeitschritt als Zwischenergebnis jeweils eine Partialsumme der diskreten Fourierkomponente bis zu diesem Zeitschritt, insbesondere als einzigen Wert, ab. Insbesondere wertet die Steuer- oder Regeleinheit ein Produkt aus dem Frequenzverhältnis der mechanischen Störung zu der Grundfrequenz der Drehbewegung und der Anzahl an in dem Störsignal enthaltenen Perioden der mechanischen Störung aus, um die zu ermittelnde Fourierkomponente zu identifizieren. Durch die erfindungsgemäße Ausgestaltung kann ein Speicherbedarf und eine Rechenbedarf, insbesondere während eines regulären Betriebs des Elektromotors, vorteilhaft gering gehalten werden. Insbesondere kann die Phasenlage der mechanischen Störung vorteilhaft schnell, insbesondere in Echtzeit, ermittelt werden.

Ferner wird vorgeschlagen, dass in zumindest einem Verfahrensschritt eine Lastabhängigkeit und/oder eine Betriebspunktabhängigkeit der Kenngröße ermittelt wird. Insbesondere werden in dem Testbetrieb Referenzwerte der Kenngröße bei unterschiedlichen Betriebspunkten und/oder unterschiedlichen Lasten des Elektromotors ermittelt. In einer vorteilhaft einfachen Ausgestaltung wird die Lastabhängigkeit und/oder die Betriebspunktabhängigkeit der Kenngröße mittels eines linearen Modells interpoliert. Optional weist das Modell der Kenngröße einen quadratischen Korrekturterm und/oder Korrekturterme höherer Ordnung auf. Die Betriebspunktabhängigkeit ist beispielsweise eine Abhängigkeit von der Grundfrequenz, insbesondere einer Drehzahl, des Rotors. Die Lastabhängigkeit ist beispielsweise eine Abhängigkeit von einer Temperaturdifferenz zwischen Kondensator und Verdampfer einer Kraftwärmemaschine, deren Kompressor den Elektromotor aufweist. Insbesondere wird die Lastabhängigkeit und/oder die Betriebspunktabhängigkeit als Kennfeld in einem Speicher der Steuer- oder Regeleinheit hinterlegt. Während eines regulären Betriebs des Elektromotors wählt die Steuer- oder Regeleinheit vorzugsweise in Abhängigkeit von einem Istwert des Betriebspunkts und/oder einem Istwert der Last des Elektromotors anhand des Kennfelds den Referenzwert der Kenngröße aus. Durch die erfindungsgemäße Ausgestaltung kann der mechanischen Störung für eine Vielzahl von Einsatzsituationen und Betriebspunkten des Elektromotors vorteilhaft zuverlässig und präzise entgegengewirkt werden.

Ferner wird vorgeschlagen, dass die Phasenlage der mechanischen Störung aus einem elektrischen Betriebssignal des Elektromotors ermittelt wird. Insbesondere verwendet die Steuer- oder Regeleinheit das elektrische Betriebssignal des Elektromotors als Störsignal. Das elektrische Betriebssignal ist insbesondere ein Statorstrom. Besonders bevorzugt ist das elektrische Betriebssignal ein mitrotierender Statorstrom, insbesondere gemäß Park-Transformation. Das elektrische Betriebssignal kann der die magnetische Flussdichte im Rotor abbildende Statorstrom ($I_d$) oder der das vom Rotor erzeugte Drehmoment abbildende Statorstrom ($I_q$) sein. Durch die erfindungsgemäße Ausgestaltung kann die Phasenlage vorteilhaft unabhängig von einer Anwendung des Elektromotors ermittelt werden.

Weiterhin wird vorgeschlagen, dass die Phasenlage der mechanischen Störung aus einem Lastsignal des Elektromotors ermittelt wird. Insbesondere verwendet die Steuer- oder Regeleinheit das Lastsignal als Störsignal. Beispielsweise wird der Elektromotor zum Antrieb eines Kompressors als Last verwendet. Insbesondere ist das Lastsignal ein Drucksignal, welches von einem Drucksensor des Kompressors erfasst wird. Das Drucksignal kann ein Niederdrucksensorsignal sein, welches insbesondere an einem Einlass des Kompressors oder stromaufwärts des Kompressors erfasst wird, oder ein Hochdrucksensorsignal sein, welches insbesondere an einem Auslass des Kompressors oder stromabwärts des Kompressors erfasst wird. Der Kompressor kann insbesondere als Hubkolbenkompressor, als Rollkolbenkompressor, als Scrollkompressor ausgebildet sein oder eine andere Bauform aufweisen. Durch die erfindungsgemäße Ausgestaltung kann die Phasenlage vorteilhaft unabhängig von einem bereits auf das Kommutierungssignal aufaddierten Kompensationssignal ermittelt werden.

Des Weiteren wird vorgeschlagen, dass ein, insbesondere der bereits genannte, Nullpunkt des mechanischen Drehpositionsparameters bei einer Bestimmung eines, insbesondere des bereits genannten, Referenzwerts der Kenngröße auf einen Nulldurchgang der elektrischen Drehposition festgelegt wird. Insbesondere wird eine Position des Rotors zum Zeitpunkt des Nulldurchgangs der elektrischen Drehposition als Nullpunkt definiert. Die Position des Rotors relativ zum Stator ist bei einer Festlegung des Nullpunkts insbesondere zufällig. Ausgehend von der für den Referenzwert verwendeten elektrischen Drehposition wird insbesondere der Zeitpunkt des zuletzt durchlaufenen Nulldurchgangs der elektrischen Drehposition verwendet, um den Nullpunkt des mechanischen Drehpositionsparameters festzulegen. Durch die erfindungsgemäße Ausgestaltung kann ein Nulldurchgang der elektrischen Drehposition vorteilhaft als Stützpunkt bei einer Bestimmung des mechanischen Drehparameters verwendet werden.

Ferner wird vorgeschlagen, dass der mechanische Drehpositionsparameter nach Bestimmung eines Initialwerts des mechanischen Drehpositionsparameters durch Zählen von Nulldurchgängen der elektrischen Drehposition aktualisiert wird. Der Initialwert ist insbesondere der insbesondere bei der Bestimmung des Referenzwerts festgelegte Nullpunkt des mechanischen Drehpositionsparameters. Vorzugsweise ermittelt die Steuer- oder Regeleinheit den Drehpositionsparameter bei einem Durchlaufen eines Nulldurchgangs der elektrischen Drehposition aus dem bisherigen Wert des Drehpositionsparameters zuzüglich einem Wert von $2\pi$ geteilt durch die Anzahl an Polpaaren des Elektromotors. Durch die erfindungsgemäße Ausgestaltung kann auf einen Sensor zur Bestimmung der mechanischen Drehposition verzichtet werden.

Darüber hinaus wird ein Elektromotor mit zumindest einem Rotor, mit zumindest einem Stator und mit zumindest einer Steuer- oder Regeleinheit zu einer Durchführung eines erfindungsgemäßen Verfahrens vorgeschlagen. Unter einer "Steuer- oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einem, insbesondere dem bereits genannten, Speicher sowie mit einem in dem Speicher gespeicherten Betriebsprogramm verstanden werden. Die Steuer- oder Regeleinheit ist insbesondere speziell dazu ausgelegt, das erfindungsgemäße Verfahren auszuführen. Durch die erfindungsgemäße Ausgestaltung kann ein Elektromotor bereitgestellt werden, welcher mit vorteilhaft wenigen Sensoren und vorteilhaft schnell, insbesondere in Echtzeit, einer mechanischen Störung entgegenwirken kann.

Ferner wird ein Kompressor mit zumindest einer Kompressionseinheit zu einem Komprimieren eines Fluids und mit zumindest einem erfindungsgemäßen Elektromotor zu einem Antrieb der Kompressionseinheit vorgeschlagen. Der Kompressor kann insbesondere als Hubkolbenkompressor, als Rollkolbenkompressor, als Scrollkompressor ausgebildet sein oder eine andere Bauform aufweisen. Die Kompressionseinheit ist dazu vorgesehen, während eines Betriebs des Kompressors im direkten Kontakt mit dem Fluid zu stehen. Die Kompressionseinheit kann eine oder mehrere Kompressionskammern umfassen, in welcher/n das Fluid komprimiert wird. Die Kompressionseinheit umfasst insbesondere zumindest ein beweglich gelagertes Kompressionselement. Das Kompressionselement ist insbesondere in der Kompressionskammer angeordnet oder bildet die Kompressionskammer zumindest teilweise aus. Das Kompressionselement ist vorzugsweise mit dem Rotor des Elektromotors mechanisch gekoppelt. Vorzugsweise umfasst der Kompressor einen Hochdrucksensor zu einer Erfassung des Hochdrucksensorsignals. Der Hochdrucksensor ist vorzugsweise stromabwärts der Kompressionseinheit angeordnet. Vorzugsweise umfasst der Kompressor einen Niederdrucksensor zu einer Erfassung des Niederdrucksignals. Der Niederdrucksensor ist vorzugsweise stromaufwärts der Kompressionseinheit angeordnet. Durch die erfindungsgemäße Ausgestaltung kann ein Kompressor bereitgestellt werden, der vorteilhaft geräuscharm und/oder vibrationsarm betrieben werden kann. Insbesondere kann einer von dem Kompressor verursachten mechanischen Störung des Elektromotors, beispielsweise durch einen Mehrtaktbetrieb, vorteilhaft entgegengewirkt werden.

Darüber hinaus wird eine Kraftwärmemaschine, insbesondere eine Wärmepumpe, mit zumindest einem Fluidkreislauf zu einem Transport von Wärme und mit zumindest einem erfindungsgemäßen Kompressor zu einem Umwälzen eines Fluids in dem Fluidkreislauf vorgeschlagen. Die Kraftwärmemaschine ist bevorzugt als Wärmepumpe, insbesondere als Wärmepumpenheizung, ausgebildet. Alternativ ist die Kraftwärmemaschine als Kältemaschine, insbesondere als Klimaanlage, ausgebildet. Die Kraftwärmemaschine kann als Kompressionswärmepumpe bzw. Kompressionskältemaschine oder als Absorptionswärmepumpe bzw. Absorptionskältemaschine ausgebildet sein. Die Kraftwärmemaschine kann insbesondere als Einzelgerät, insbesondere zu einer Innenaufstellung, als Split-Kraftwärmemaschine, insbesondere mit einer Außeneinheit und einer Inneneinheit, oder als Hybrid-Kraftwärmemaschine, insbesondere mit einer Erdwärmeübertrager und einem Luftwärmeübertrager, ausgebildet sein. Insbesondere umfasst die Kraftwärmemaschine ein Gehäuse, in welchem der Kompressor zusammen mit dem Elektromotor und zumindest ein Teil des, insbesondere der gesamte, Fluidkreislaufs angeordnet ist. Durch die erfindungsgemäße Ausgestaltung kann eine Wärmepumpe bereitgestellt werden, die vorteilhaft geräuscharm und/oder vibrationsarm betrieben werden kann.

Das erfindungsgemäße Verfahren, der erfindungsgemäße Elektromotor, der erfindungsgemäße Kompressor und/oder die erfindungsgemäße Kraftwärmemaschine sollen/soll hierbei nicht auf die oben beschriebene Anwendung und Ausführungsform beschränkt sein. Insbesondere kann das erfindungsgemäße Verfahren , der erfindungsgemäße Elektromotor, der erfindungsgemäße Kompressor und/oder die erfindungsgemäße Kraftwärmemaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 eine schematische Darstellung eines erfindungsgemäßen Elektromotors,

Fig. 2 ein schematisches Flussdiagramm eines erfindungsgemäßen Verfahrens,

Fig. 3 ein schematisches Diagramm eines Zusammenhangs zwischen einer elektrischen Drehposition des Elektromotors, einem mechanischen Drehpositionsparameter eines Rotors des Elektromotors und einer mechanischen Störung einer Drehbewegung des Rotors und

Fig. 4 ein schematisches Diagramm einer Abhängigkeit einer Kenngröße des Elektromotors von einem Betriebspunkt des Elektromotors und von einer Last des Elektromotors.

Beschreibung des Ausführungsbeispiels

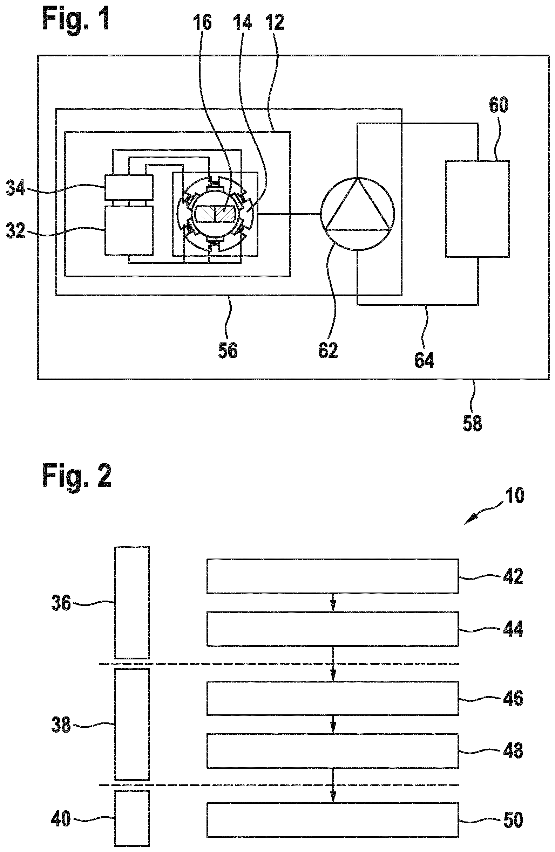

Figur 1 zeigt eine Kraftwärmemaschine 58. Die Kraftwärmemaschine 58 ist beispielhaft als Wärmepumpe ausgebildet. Die Kraftwärmemaschine 58 umfasst einen Fluidkreislauf 64 zu einem Transport von Wärme, insbesondere vermittelt über einen Massentransport eines Fluids. Die Kraftwärmemaschine 58 umfasst zumindest einem Kompressor 56 zu einem Umwälzen des Fluids in dem Fluidkreislauf 64. Die Kraftwärmemaschine 58 umfasst zumindest eine Kraftwärmeeinheit 60. Die Kraftwärmeeinheit 60 umfasst zumindest zwei Wärmeübertrager, zu einer Kopplung zweier Wärmereservoirs über den Fluidkreislauf. Die Wärmeübertrager sind beispielsweise als Kondensator und Verdampfer ausgebildet. Der Kompressor 56 umfasst zumindest eine Kompressionseinheit 62 zu einem Komprimieren des Fluids. Der Kompressor 56 umfasst zumindest einem Elektromotor zu einem Antrieb der Kompressionseinheit 62.

Der Elektromotor 12 umfasst zumindest einen Rotor 16 und zumindest einen Stator 14. Der Elektromotor 12 ist hier beispielhaft als bürstenloser Gleichstrommotor dargestellt (BLDC). Der Elektromotor 12 umfasst beispielhaft drei Polpaare. In einer alternativen Ausgestaltung weist der Elektromotor 12 weniger Polpaare oder mehr Polpaare auf. Die Polpaare sind insbesondere als Drahtwicklungen ausgebildet. Die Polpaare sind bevorzugt am Stator 14 angeordnet. Alternativ sind die Polpaare am Rotor 16 angeordnet. Der Rotor 16, alternativ der Stator 14, umfasst vorzugsweise zumindest einen, insbesondere eine Vielzahl an Permanentmagneten. Der Rotor 16 ist insbesondere als Innenläufer ausgebildet. Alternativ ist der Rotor 16 als Außenläufer ausgebildet. Der Elektromotor 12 umfasst zumindest eine Steuer- oder Regeleinheit 32 zu einer Durchführung eines Verfahrens 10, welches in Figur 2 näher beschrieben wird. Der Elektromotor 12 umfasst insbesondere eine Versorgungseinheit 34 zu einer Versorgung der Polpaare mit elektrischen Strömen, insbesondere Statorströmen. Die Steuer- oder Regeleinheit 32 ist insbesondere zu einer feldorientierten Regelung des Elektromotors 12 ausgebildet. Insbesondere ist die Steuer- oder Regeleinheit 32 dazu vorgesehen, die von der Versorgungseinheit 34 bereitgestellten elektrischen Ströme einzustellen.

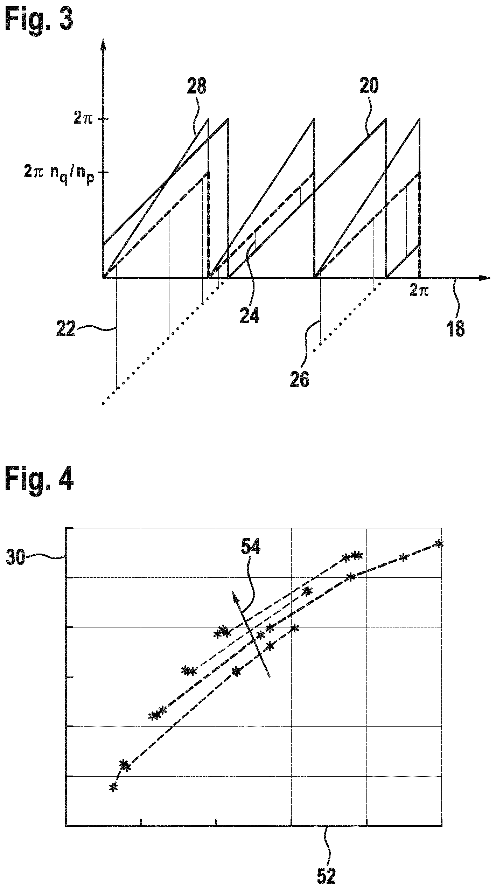

Figur 2 zeigt das Verfahren 10. Das Verfahren 10 ist zum Betrieb des Elektromotors 12 vorgesehen. Das Verfahren 10 umfasst insbesondere eine Kompensationsphase 40. In der Kompensationsphase 40 wird einer mechanischen Störung 20 (vgl. Fig. 3) einer Drehbewegung des Rotors 16 in Abhängigkeit von einem ermittelten mechanischen Drehpositionsparameter 18 (vgl. Fig. 3) des Rotors 16 entgegengewirkt. Die mechanisch Störung 20 wird beispielsweise durch einen Taktbetrieb der Kompressionseinheit 62 verursacht. Der mechanischen Drehpositionsparameter 18 beschreibt insbesondere eine Winkelstellung des Rotors 16 relativ zu dem Stator 14. Das Verfahren 10 umfasst insbesondere einen Einschaltvorgang 38. Der mechanische Drehpositionsparameter 18 des Rotors 16 relativ zu dem Stator 14 wird in dem Einschaltvorgang 38 ermittelt. Der mechanische Drehpositionsparameter 18 wird in Abhängigkeit von einer Kenngröße 22, 24, 26 (vgl. Fig. 3) des Elektromotors 12 ermittelt. Die Kenngröße 22, 24, 26 beschreibt einen Zusammenhang zwischen einer Phasenlage der mechanischen Störung 20 und zumindest einer elektrischen Drehposition 28 (vgl. Fig. 3) des Elektromotors 12. Bei einem Einschalten des Elektromotors 12 wird ein Istwert der Kenngröße 22 mit einem im Vorfeld des Betriebs ermittelten Referenzwert 30 (vgl. Fig. 4) der Kenngröße 22 verglichen, um den mechanischen Drehpositionsparameter 18 zu bestimmen. Insbesondere umfasst das Verfahren 10 einen Testbetrieb 36. In dem Testbetrieb 36 wird insbesondere der Referenzwert 30 ermittelt.

Der Testbetrieb 36 umfasst insbesondere eine Referenzwertbestimmung 42. In der Referenzwertbestimmung 42 wird der Elektromotor 12 von der Steuer- oder Regeleinheit 32 vorzugsweise mittels eines Kommutierungssignals zu einer feldorientierten Regelung betrieben. In der Referenzwertbestimmung 42 erstellt die Steuer- oder Regeleinheit 32 insbesondere das Kommutierungssignal ohne Berücksichtigung der mechanischen Störung 20. Insbesondere wirkt die Steuer- oder Regeleinheit 32 in der Referenzwertbestimmung 42 der mechanischen Störung 20 nicht aktiv entgegen. Die Steuer- oder Regeleinheit 32 führt die feldorientierte Regelung insbesondere mit einem geschätzten Istwert der elektrischen Drehposition 28 durch. Die Kenngröße 22, 24, 26 wird insbesondere in einem stationären Betriebspunkt des Elektromotors 12 von der Steuer- oder Regeleinheit 32 ermittelt. Vorzugsweise ermittelt die Steuer- oder Regeleinheit 32 folgendes als Kenngröße 22, 24, 26:

$$Kenngröße = \mod\left(\frac{n_q}{n_p}\,\varphi_{el} - \varphi_{st}, 2\pi\right),$$

wobei $n_q$ ein Frequenzverhältnis der mechanischen Störung 20 zu einer Grundfrequenz der Drehbewegung des Rotors 16 ist, wobei $n_p$ die Anzahl an Polpaaren des Elektromotors 12 ist und wobei $\varphi_{el}$ die elektrische Drehposition 28 und $\varphi_{st}$ die Phasenlage der mechanischen Störung 20 bezeichnet.

Das von der Steuer- oder Regeleinheit 32 zu verwendende Frequenzverhältnis $n_q$ wird insbesondere von einem Installateur des Elektromotors 12 vorgegeben. Insbesondere bezeichnet $n_q$ die $n_q$-te Oberwelle der Drehbewegung des Rotors 16. In dem Testbetrieb 36 kann die mechanische Störung 20 beispielsweise mittels externer Noise, Vibration, Harshness (NVH)-Sensorik, insbesondere Beschleunigungssensoren, Mikrofone oder dergleichen, erfasst werden, mittels Simulationen ermittelt werden oder auf Erfahrungswerten beruhend ausgewählt werden. Insbesondere wird das Frequenzverhältnis $n_q$ von einem Installateur des Elektromotors 12 in einem Speicher der Steuer- oder Regeleinheit 32 hinterlegt. Insbesondere wird die Anzahl an Polpaaren $n_p$ des Elektromotors 12 von einem Installateur des Elektromotors 12 in einem Speicher der Steuer- oder Regeleinheit 32 hinterlegt.

Die Phasenlage $\varphi_{st}$ der mechanischen Störung 20 wird mittels diskreter Fourieranalyse ermittelt. Die Phasenlage der mechanische Störung 20 wird insbesondere aus einem Störsignal ermittelt. Das Störsignal umfasst insbesondere einen Signalanteil, der mit der mechanischen Störung 20 korreliert, insbesondere von der mechanischen Störung 20 verursacht wird oder ursächlich für die mechanische Störung 20 ist. Insbesondere umfasst das Störsignal einen Signalanteil, insbesondere einen Hauptsignalanteil, der unabhängig von der mechanischen Störung 20 ist und insbesondere von der mechanische Störung 20 moduliert wird. Insbesondere erfasst die Steuer- oder Regeleinheit 32 das Störsignal und/oder fragt dieses von einer Last des Elektromotors 12 ab. Das Störsignal ist beispielsweise ein elektrisches Betriebssignal des Elektromotors 12, insbesondere einer der mitrotierenden Statorströme, oder ein Lastsignal des Elektromotors 12. Vorzugsweise wertet die Steuer- oder Regeleinheit 32 ein Zeitintervall des Störsignals aus, welches ein ganzzahlig Vielfaches einer Periode der mechanischen Störung 20 und ein ganzzahlig Vielfaches einer Periode der elektrischen Drehposition 28 umfasst. Insbesondere wertet die Steuer- oder Regeleinheit 32 das Störsignal mittels diskreter Fourieranalyse aus. Optional beginnt das auszuwertende Zeitintervall des Störsignals bei einem Nulldurchgang, alternativ bei einem beliebigen Wert, der elektrischen Drehposition 28. Vorzugsweise ermittelt die Steuer- oder Regeleinheit 32 die Phasenlage $\varphi_{st}$ der mechanischen Störung 20 wie folgt:

$$\varphi_{st} = \arctan\left(\frac{b_k}{a_k}\right) + \frac{\pi}{2},$$

wobei $b_k$ den Sinusanteil und $a_k$ den Cosinusanteil der $k$-ten Fourierkomponente des Störsignals bezeichnet, wobei $k = n_q n_{DFT}$ ist, wobei $n_{DFT}$ die Anzahl an Perioden der mechanischen Störung 20 in dem auszuwertenden Zeitintervall des Störsignals bezeichnet und wobei $n_q$ das bereits genannte Frequenzverhältnis der mechanischen Störung 20 zu der Grundfrequenz der Drehbewegung des Rotors 16 ist. In einer vorteilhaft schnellen Ausgestaltung des Verfahrens 10 ist die durch $k = n_q n_{DFT}$ definierte Fourierkomponente die einzige Fourierkomponente, die zu einer Bestimmung der Phasenlage der mechanischen Störung 20 von der Steuer- oder Regeleinheit 32 berechnet wird. Alternativ wird zumindest eine weitere Fourierkomponente berechnet.

In der Referenzwertbestimmung 42 ermittelt die Steuer- oder Regeleinheit 32 insbesondere den Referenzwert 30 der Kenngröße 22, 24, 26. Der Elektromotor 12 durchläuft pro Periode des mechanischen Drehpositionsparameters 18 insbesondere $n_p$ Perioden der elektrischen Drehposition 28. Die Steuer- oder Regeleinheit 32 ordnet den Referenzwert 30 vorzugsweise einer, beispielsweise der ersten, Periode der elektrischen Drehposition 28 innerhalb einer Periode des mechanischen Drehpositionsparameters 18 zu. Ein Nullpunkt des mechanischen Drehpositionsparameters 18 wird, insbesondere dadurch, von der Steuer- oder Regeleinheit 32 bei einer Bestimmung des Referenzwerts 30 der Kenngröße 22 auf einen, insbesondere den zuletzt durchlaufenen, Nulldurchgang der elektrischen Drehposition 28 festgelegt. Insbesondere ordnet die Steuer- oder Regeleinheit 32 den auf den Nullpunkt nachfolgenden Nulldurchgängen der elektrischen Drehposition 28 einen Wert des mechanischen Drehpositionsparameters 18 zu, der jeweils um $\dfrac{2\pi}{n_p}$ erhöht wird. Der mechanische Drehpositionsparameter 18 wird nach Bestimmung eines Initialwerts, d. h. nach Festlegung des Nullpunkts, des mechanischen Drehpositionsparameters 18 durch Zählen von Nulldurchgängen der elektrischen Drehposition 28 aktualisiert. Die Kenngröße 22, 24, 26 ist insbesondere dazu vorgesehen, den Nullpunkt des mechanischen Drehpositionsparameters 18 zu identifizieren, insbesondere die Nulldurchgänge der elektrischen Drehposition 28 innerhalb einer Periode des mechanischen Drehpositionsparameters 18 voneinander unterscheidbar zu machen.

Der Testbetrieb 36 umfasst vorzugsweise eine Kompensationsbestimmung 44. In der Kompensationsbestimmung 44 wird insbesondere ein Kompensationssignal ermittelt, welches bei einem Aufaddieren auf das Kommutierungssignal der mechanischen Störung 20 entgegenwirkt. Insbesondere ist das Kompensationssignal dazu vorgesehen, ausgehend von dem ermittelten Drehpositionsparameter 18 und der ermittelten Phasenlage der mechanischen Störung 20 gegenphasig zu der mechanischen Störung 20 auf das Kommutierungssignal aufaddiert zu werden, um der mechanischen Störung 20 entgegenzuwirken. Das Kompensationssignal kann beispielsweise von einem Installateur mittels einer Simulation des Elektromotors 12 ermittelt werden oder mittels externer NVH-Sensorik, welcher insbesondere für die Dauer des Testbetriebs 36 an der Steuer- oder Regeleinheit 32 angeschlossen wird, von der Steuer- oder Regeleinheit 32 über einen Regelkreis zur Minimierung der mechanischen Störung 20 ermittelt werden. Das ermittelte Kompensationssignal wird insbesondere in dem Speicher der Steuer- oder Regeleinheit 32 hinterlegt. Optional werden die Referenzwertbestimmung 42 und die Kompensationsbestimmung 44 für zumindest eine weitere mechanische Störung 20 wiederholt. Insbesondere wird das Kompensationssignal in dem Speicher mit dem Frequenzverhältnis $n_q$ der mechanischen Störung 20 zu der Grundfrequenz verknüpft hinterlegt.

Bei dem Einschaltvorgang 38 nach dem Testbetrieb 36 weist der Rotor 16 zunächst insbesondere einen zufälligen Wert des mechanischen Drehpositionsparameters 18 auf. Der Einschaltvorgang 38 umfasst insbesondere eine Kennwertbestimmung 46. In der Kennwertbestimmung 46 wird der Elektromotor 12 von der Steuer- oder Regeleinheit 32 vorzugsweise mittels des Kommutierungssignals zu einer feldorientierten Regelung betrieben. In der Kennwertbestimmung 46 erstellt die Steuer- oder Regeleinheit 32 insbesondere das Kommutierungssignal ohne Berücksichtigung der mechanischen Störung 20. Insbesondere wirkt die Steuer- oder Regeleinheit 32 in der Kennwertbestimmung 46 der mechanischen Störung 20 nicht aktiv entgegen. Die Steuer- oder Regeleinheit 32 führt die feldorientierte Regelung insbesondere mit einem geschätzten Istwert der elektrischen Drehposition 28 durch. Die Kenngröße 22, 24, 26 wird insbesondere in einem stationären Betriebspunkt des Elektromotors 12 von der Steuer- oder Regeleinheit 32 ermittelt. Die Kenngröße 22, 24, 26 wird in der Kennwertbestimmung 46 insbesondere in analoger Weise wie der Referenzwert 30 in dem Testbetrieb ermittelt. Der in der Kennwertbestimmung 46 ermittelte Wert der Kenngröße 22, 24, 26 wird im Folgenden zu einer Unterscheidung von dem Referenzwert 30 als Istwert der Kenngröße 22, 24, 26 bezeichnet.

Der Einschaltvorgang 38 umfasst vorzugsweise eine Nullpunktbestimmung 48. Vorzugsweise vergleicht die Steuer- oder Regeleinheit 32 in der Nullpunktbestimmung 48 den Istwert der Kenngröße 22, 24, 26 mit dem Referenzwert 30. Insbesondere beträgt eine Differenz zwischen dem Istwert der Kenngröße 22, 24, 26 und dem Referenzwert 30, insbesondere unter Vernachlässigung von Messungenauigkeiten, ein ganzzahlig Vielfaches von $\dfrac{2\pi}{n_p}$. Die Kenngröße 22, 24, 26 verringert sich gemäß obiger Gleichung insbesondere mit jedem Nulldurchgang der elektrischen Drehposition 28 um $2\pi\dfrac{n_q}{n_p}$. In einer vorteilhaft schnellen Ausgestaltung des Verfahrens 10 ermittelt die Steuer- oder Regeleinheit 32 einen, insbesondere genau einen, Istwert der Kenngröße 22, 24, 26. In einer vorteilhaft fehlerrobusten Ausgestaltung des Verfahrens 10 ermittelt die Steuer- oder Regeleinheit 32 mehrere Istwerte der Kenngröße 22, 24, 26, insbesondere zu einer Überprüfung, ob die Istwerte der Kenngröße 22, 24, 26 sich um je $2\pi\frac{n_q}{n_p}$ voneinander unterscheiden. Die Steuer- oder Regeleinheit 32 ordnet vorzugsweise demjenigen elektrischen Nulldurchgang der elektrischen Drehposition 28 den Nullpunkt des mechanischen Drehpositionsparameters 18 zu, der eine vorgegebene, insbesondere die geringste, Differenz zwischen dem Istwert der Kenngröße 22, 24, 26 und dem Referenzwert 30 aufweist. Der mechanische Drehpositionsparameter 18 wird von der Steuer- oder Regeleinheit 32 nach Festlegung des Nullpunkts des mechanischen Drehpositionsparameters 18 durch Zählen von Nulldurchgängen der elektrischen Drehposition 28 aktualisiert.

Die Kompensationsphase 40 umfasst insbesondere einen Aufprägeschritt 50. In dem Aufprägeschritt 50 addiert die Steuer- oder Regeleinheit 32 das Kompensationssignal in Abhängigkeit von dem ermittelten mechanischen Drehpositionsparameter 18 und der Phasenlage der mechanischen Störung 20 auf das Kommutierungssignal auf, um der mechanischen Störung 20 entgegenzuwirken. Insbesondere liest die Steuer- oder Regeleinheit 32 das aufzuaddierende Kompensationssignal aus dem Speicher der Steuer- oder Regeleinheit 32 aus. Insbesondere wählt die Steuer- oder Regeleinheit 32 dasjenige Kompensationssignal aus, welches mit dem zur Ermittlung der Kenngröße 22, 24, 26 verwendeten Frequenzverhältnis $n_q$ der mechanischen Störung 20 zu der Grundfrequenz verknüpft ist.

Figur 3 zeigt ein Diagramm, in welchem ein beispielhafter Verlauf der elektrischen Drehposition 28 und der mechanischen Störung 20 über eine Periode des mechanischen Drehpositionsparameters 18 aufgetragen ist. Die Anzahl an Polpaaren $n_p$ beträgt beispielhaft drei. Die mechanische Störung 20 weist beispielhaft ein Frequenzverhältnis $n_q$ zur Grundfrequenz des mechanischen Drehpositionsparameters 18 von zwei auf. Die elektrische Drehposition 28 wird in der Kenngröße 22, 24, 26 insbesondere um einen Faktor $\frac{n_q}{n_p}$ skaliert. Die skalierte elektrische Drehposition 28 verläuft insbesondere abschnittsweise parallel zur mechanischen Störung 20. Die Kenngröße 22, 24, 26 ist insbesondere innerhalb einer Periode der elektrischen Drehposition 28, insbesondere von Messungenauigkeiten abgesehen, konstant. Insbesondere springt die Kenngröße 22, 24, 26 bei einem, insbesondere jedem Nulldurchlauf der elektrischen Drehposition 28 um einen Wert $2\pi\frac{n_q}{n_p}$. Insbesondere weist jede Periode der elektrischen Drehposition 28 innerhalb einer Periode des mechanischen Drehpositionsparameters 18 einen anderen Wert der Kenngröße 22, 24, 26 auf. Ist der Faktor $\frac{n_q}{n_p}$ nicht teilerfremd und weist einen gemeinsamen Teiler $1 < P < n_p$ auf, ist eine eindeutige Bestimmung des mechanischen Drehpositionsparameters 18 in einem Intervall von $[1, \frac{2\pi}{P}]$ möglich.

Figur 4 zeigt eine Abhängigkeit der Kenngröße 22, 24, 26 von einer Last 52 und einem Betriebspunkt 54 des Elektromotors 12. In dem Testbetrieb 36 wird eine Lastabhängigkeit und/oder eine Betriebspunktabhängigkeit der Kenngröße 22, 24, 26 ermittelt. Insbesondere wird die Referenzwertbestimmung 42 und die Kompensationsbestimmung 44 für verschiedene Werte des Betriebspunkts 54 und/oder der Last 52 durchgeführt. Der Betriebspunkt 54 wird beispielsweise durch eine Drehzahl des Rotors 16 beschrieben. Bei einem Einsatz des Elektromotors 12 in dem Kompressor 56 ist die Last 52 beispielsweise durch einen Temperaturunterschied zwischen dem Kondensator und dem Verdampfer der Kraftwärmeeinheit 60 gegeben. Die Lastabhängigkeit und/oder die Betriebspunktabhängigkeit werden in einer vorteilhaft einfachen Ausgestaltung des Verfahrens 10 mit einem linearen Modell, insbesondere abschnittsweise, interpoliert. Die Betriebspunktabhängigkeit und/oder die Lastabhängigkeit der Kenngröße 22, 24, 26, insbesondere des Referenzwerts 30, wird vorzugsweise in dem Speicher der Steuer- oder Regeleinheit 32 hinterlegt. Insbesondere wählt die Steuer- oder Regeleinheit 32 während der Nullpunktbestimmung 48 den Referenzwert 30 in Abhängigkeit von einem Istwert des Betriebspunkts 54 und/oder der Last 52 zum Zeitpunkt der Nullpunktbestimmung 48 aus.

Der erfindungsgemäße Elektromotor und/oder Kompressor und/oder die Kraftwärmemaschine, insbesondere die Wärmepumpe, können stationär oder mobil eingesetzt werden.

Ein mobiler Einsatz ist insbesondere bei einem Fahrzeug, vorzugsweise Personenkraftwagen, Lastkraftwagen, Bus; oder einem Schiff; oder einem Flugzeug denkbar. Vorzugsweise kann die Kraftwärmemaschine, insbesondere die Wärmepumpe, zur Erwärmung und/oder Kühlung verwendet werden. Insbesondere können mithilfe der Kraftwärmemaschine zumindest eine Komponente des Fahrzeugs oder Flugzeugs oder Schiffs temperiert werden. Zusätzlich oder alternativ kann der Personenbereich, insbesondere der Fahrgastinnenraum, temperiert werden.

Beim stationären Einsatz kann die Kraftwärmemaschine insbesondere zur Erwärmung oder Kühlung von Gebäuden und/oder Gebäudeteilen und/oder Trinkwasser und/oder Brauchwasser eingesetzt werden.

Das erfindungsgemäße Verfahren kann insbesondere entsprechend mobil oder stationär eingesetzt werden.

**Patentansprüche**

1. Verfahren zum Betrieb eines Elektromotors, welcher zumindest einen Stator (14) und einen Rotor (16) umfasst, wobei in zumindest einem Verfahrensschritt ein mechanischer Drehpositionsparameter (18) des Rotors (16) relativ zu dem Stator (14) ermittelt wird und wobei in zumindest einem Verfahrensschritt einer mechanischen Störung (20) einer Drehbewegung des Rotors (16) in Abhängigkeit von dem ermittelten mechanischen Drehpositionsparameter (18) entgegengewirkt wird, **dadurch gekennzeichnet, dass** der mechanische Drehpositionsparameter (18) in Abhängigkeit von einer Kenngröße (22, 24, 26) des Elektromotors ermittelt wird, welche einen Zusammenhang zwischen einer Phasenlage der mechanischen Störung (20) und zumindest einer elektrischen Drehposition (28) des Elektromotors beschreibt.

2. Verfahren nach Anspruch 1, **dadurch gekennzeichnet, dass** bei einem Einschalten des Elektromotors ein Istwert der Kenngröße (22) mit einem im Vorfeld des Betriebs ermittelten Referenzwert (30) der Kenngröße (22) verglichen wird, um den mechanischen Drehpositionsparameter (18) zu bestimmen.

3. Verfahren nach Anspruch 1 oder 2, **dadurch gekennzeichnet, dass** die Phasenlage der mechanischen Störung (20) mittels diskreter Fourieranalyse ermittelt wird.

4. Verfahren nach einem der vorhergehenden Ansprüche, **dadurch gekennzeichnet, dass** in zumindest einem Verfahrensschritt eine Lastabhängigkeit und/oder eine Betriebspunktabhängigkeit der Kenngröße (22) ermittelt wird.

5. Verfahren nach einem der vorhergehenden Ansprüche, **dadurch gekennzeichnet, dass** die Phasenlage der mechanischen Störung (20) aus einem elektrischen Betriebssignal des Elektromotors ermittelt wird.

6. Verfahren nach einem der vorhergehenden Ansprüche, **dadurch gekennzeichnet, dass** die Phasenlage der mechanischen Störung (20) aus einem Lastsignal des Elektromotors ermittelt wird.

7. Verfahren nach einem der vorhergehenden Ansprüche, **dadurch gekennzeichnet, dass** ein Nullpunkt des mechanischen Drehpositionsparameters (18) bei einer Bestimmung eines Referenzwerts (30) der Kenngröße (22) auf einen Nulldurchgang der elektrischen Drehposition (28) festgelegt wird.

8. Verfahren nach einem der vorhergehenden Ansprüche, **dadurch gekennzeichnet, dass** der mechanisch Drehpositionsparameter (18) nach Bestimmung eines Initialwerts des mechanischen Drehpositionsparameters (18) durch Zählen von Nulldurchgängen der elektrischen Drehposition (28) aktualisiert wird.

9. Elektromotor mit zumindest einem Rotor (16), mit zumindest einem Stator (14) und mit zumindest einer Steuer- oder Regeleinheit (32) zu einer Durchführung eines Verfahrens nach einem der vorhergehenden Ansprüche.

10. Kompressor mit zumindest einer Kompressionseinheit (62) zu einem Komprimieren eines Fluids und mit zumindest einem Elektromotor nach Anspruch 9 zu einem Antrieb der Kompressionseinheit (62).

11. Kraftwärmemaschine, insbesondere Wärmepumpe, mit zumindest einem Fluidkreislauf (64) zu einem Transport von Wärme und mit zumindest einem Kompressor nach Anspruch 10 zu einem Umwälzen eines Fluids in dem Fluidkreislauf (64).

**Fig. 1**

**Fig. 2**

# Fig. 3

# Fig. 4

Europäisches
Patentamt

European
Patent Office

Office européen
des brevets

## EUROPÄISCHER RECHERCHENBERICHT

**Nummer der Anmeldung**

**EP 23 15 4114**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2012 006492 A1 (SECOP GMBH [DE]) 4. Oktober 2012 (2012-10-04) | 1,3-11 | INV. H02P6/18 F25B31/02 H02P21/18 |
| Y | * Absatz [0038] – Absatz [0044]; Ansprüche 1,6,11; Abbildungen 1,4-7 * | 2 | |
| | ----- | | |
| X | WO 2017/162439 A1 (BSH HAUSGERAETE GMBH [DE]) 28. September 2017 (2017-09-28) | 1,9-11 | |
| Y | * Seite 4 – Seite 14; Abbildungen 4-6 * | 2 | |
| | ----- | | |
| X | US 10 488 086 B2 (BSH HAUSGERAETE GMBH [DE]) 26. November 2019 (2019-11-26) * Spalte 5 – Spalte 7; Anspruch 1; Abbildung 5 * | 1,9-11 | |
| | ----- | | |
| X | DE 10 2012 006495 A1 (SECOP GMBH [DE]) 24. Januar 2013 (2013-01-24) * Absatz [0029] – Absatz [0057]; Abbildungen 1-3 * | 1,9-11 | |
| | ----- | | |

**RECHERCHIERTE SACHGEBIETE (IPC)**

H02P
F25B

Der vorliegende Recherchenbericht wurde für alle Patentansprüche erstellt

| Recherchenort | Abschlußdatum der Recherche | Prüfer |
|---|---|---|
| **München** | **19. Juni 2023** | **Kruip, Stephan** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 15 4114

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-06-2023

| Im Recherchenbericht angeführtes Patentdokument | Datum der Veröffentlichung | Mitglied(er) der Patentfamilie | Datum der Veröffentlichung |
|---|---|---|---|
| DE 102012006492 A1 | 04-10-2012 | CN 102739140 A<br>DE 102012006492 A1 | 17-10-2012<br>04-10-2012 |
| WO 2017162439 A1 | 28-09-2017 | CN 108781048 A<br>DE 102016204674 A1<br>EP 3433926 A1<br>PL 3433926 T3<br>WO 2017162439 A1 | 09-11-2018<br>28-09-2017<br>30-01-2019<br>02-05-2023<br>28-09-2017 |
| US 10488086 B2 | 26-11-2019 | CN 107923685 A<br>DE 102015215972 A1<br>EP 3338038 A1<br>US 2018238595 A1<br>WO 2017032630 A1 | 17-04-2018<br>23-02-2017<br>27-06-2018<br>23-08-2018<br>02-03-2017 |
| DE 102012006495 A1 | 24-01-2013 | CN 102739123 A<br>DE 102012006495 A1 | 17-10-2012<br>24-01-2013 |

EPO FORM P0461

Für nähere Einzelheiten zu diesem Anhang : siehe Amtsblatt des Europäischen Patentamts, Nr.12/82